# FASCICULE DE BREVET EUROPEEN

(11) **EP 2 068 386 B1**
(45) Date de publication et mention de la délivrance du brevet: **28.09.2011**
(21) Numéro de dépôt: 09154652.3
(22) Date de dépôt: 21.03.2005
(51) Int. Cl.: H01M 4/90, H01M 8/12

(54) **Materiau oxyde et electrode pour pile a combustible le comprenant**
Oxidmaterial und Elektrode für Batterie mit Brennstoffzelle, die diese umfasst
Oxide material and electrode for fuel cell comprising same

(30) Priorité: 24.03.2004 FR 0403036
(43) Date de publication de la demande: 10.06.2009
(62) Demande divisionnaire de: 05742641.3
(73) Titulaire: Electricité de France, 75008 Paris (FR); Centre National de la Recherche Scientifique - CNRS, 75794 Paris Cedex 16 (FR)
(72) Inventeur: Stevens, Philippe, 77940, NOISY-RUDIGNON (FR); Boehm, Emmanuelle, 74500, LUGRIN (FR); Bassat, Jean-Marc, 33610, CESTAS (FR); Mauvy, Fabrice, 33610, Canejan (FR); Grenier, Jean-Claude, 33140, Cadaujac (FR)
(74) Mandataire: Cabinet Plasseraud

(56) Documents cités:
- WO-A-03/075377
- V. A. KULICHENKO, S. A. NEDIL'KO AND A. G. DZYAZ'KO: UKRANIAN CHEMISTRY JOURNAL, vol. 62, no. 3, 1996, pages 5-7, XP009115899
- KHARTON V V ET AL: "Surface-limited oxygen transport and electrode properties of La2Ni0.8Cu0.2O4+delta" SOLID STATE IONICS, NORTH HOLLAND PUB. COMPANY. AMSTERDAM, NL, vol. 166, no. 3-4, 30 janvier 2004 (2004-01-30), pages 327-337, XP004494049 ISSN: 0167-2738

## Description

L'invention concerne un nouveau matériau oxyde. L'invention concerne aussi une électrode comprenant un tel matériau. L'invention concerne enfin un dispositif de production d'énergie électrique de type pile à combustible comprenant au moins une cellule électrochimique comprenant une cathode qui est une telle électrode.

Une pile, ou batterie secondaire telle que cellule électrochimique, convertit de l'énergie chimique en énergie électrique. Dans une pile à combustible, de l'hydrogène issu par exemple de tout combustible à base de carbone tel que du gaz, un produit pétrolier à base du pétrole, ou du méthanol, est combiné avec de l'oxygène puisé dans l'air pour produire de l'électricité, de l'eau et de la chaleur au moyen d'une réaction électrochimique. Le coeur de la pile à combustible se compose d'une anode, d'une cathode, et d'un électrolyte qui est solide et à base de céramique. Les ions d'oxygène circulent à travers l'électrolyte et le courant électrique de la cathode vers l'anode.

Les SOFC, acronyme de« Solid Oxid Fuel Cell » en anglais pour « pile à oxyde solide », sont des piles à combustible fonctionnant le plus souvent à haute température, de l'ordre de 650 à 1000°C. Elles peuvent êtres utilisées dans des systèmes d'alimentation stationnaires de grande puissance (250 kW) et de faible puissance (de 1 à 50 kW). Elles sont potentiellement intéressantes par leur rendement électrique élevé, (généralement de l'ordre de 50 à 70%), et par l'utilisation de la chaleur qu'elles produisent.

Les matériaux actuels des SOFC fonctionnent à des températures d'environ 900 à 1000°C. Ils sont explicités ci-après. L'électrolyte solide le plus communément utilisé est la zircone stabilisée à l'yttrium ou YSZ (acronyme de « Yttria Stabilized Zirconia » en anglais). L'anode, qui est notamment le siège de la réaction entre H₂ et les anions O²⁻ provenant de l'électrolyte, est le plus couramment un cermet (céramique métallique) du type nickel dispersé dans de la zircone stabilisée (YSZ), éventuellement dopé avec du ruthénium Ru. La cathode qui collecte les charges et qui est le siège de la réduction d'oxygène diffusant ensuite à l'état d'anion O²⁻ à travers l'électrolyte, est le plus couramment à ba se d'oxyde de structure perovskite tel que le manganite de lanthane dopé au strontium (La, Sr) MnO_{3±δ}. Enfin des plaques bipolaires, ou interconnecteurs, sont présentes, en général au nombre de deux, et ont pour rôle de collecter les charges à l'anode et à la cathode, et de séparer les deux gaz, combustible (H₂) et comburant (O₂) .

Or le fonctionnement de la pile à une température aussi élevée entraîne de nombreux problèmes, notamment le coût des interconnecteurs et les tenues chimique et surtout mécanique des matériaux en température. C'est pourquoi il a été envisagé de diminuer la température de fonctionnement de la pile autour de 600 - 800°C, ce qui permettrait d'utiliser comme interconnecteurs de l'inconel® (alliage résistant à la chaleur à base de Ni, Cr et Fe) ou des aciers inoxydables. L'électrolyte qui a été envisagé pour remplacer l'YSZ est la cérine dopée à l'oxyde de gadolinium, CeO₂ :Gd₂O₃(Ce_{0,9}Gd_{0,1}O_{1,95}) de structure fluorine, ou la perovskite LaGaO₃ substituée (La_{0,9}Sr_{0,1}Ga_{0,8}Mg_{0,2}O_{2,65}). L'anode pourrait être à base de chromite de vanadium. Quant à la cathode, divers matériaux ont été étudiés dont les perovskites de type ABO₃, et en particulier LaMnO₃ dopé pour une question de bonne tenue mécanique, déficitaires ou non sur le site A, et surtout les perovskites déficitaires en oxygène ABO_{3-δ} telle que (La, Sr) CoO_{3-δ}. Il reste qu'il n'existe pas à l'heure actuelle de matériau permettant d'utiliser la cathode avec à la fois une bonne conductivité électronique et une bonne conductivité ionique, ainsi qu'une bonne stabilité thermique, et un rendement suffisant au point de vue industriel.

L'article de Kulichenko et al, dans Chemistry Journal, vol. 62, n° 3, 1996, pages 5-7, divulgue un matériau oxyde de formule La₂₋ₓNiO_{4-δ} utilisé en tant que matériau superconducteur, mais non pas en tant qu'électrode.

La demande WO 03/075377 divulgue une cathode à base d'un matériau oxyde de formule Ln₂₋ₐAₐBO_{4-δ} où Ln est un élément des terres rares, A = Ca ou Sr, B = Fe, Co, Ni ou Mn, a est compris entre 0 et 1,6 et δ est déterminé par la valence des métaux. Cette électrode à base d'un matériau oxyde déficitaire en oxygène présente une structure de type K₂NiF₄ et une conductivité électrique élevée à des températures comprises entre 700 °C et 100 °C.

L'article de Kharton et al. dans Solid State Ionics, 166 (2004), pages 327 - 337 divulgue un matériau oxyde de formule La₂Ni_{0,8}Cu_{0,2}O_{4+δ} et son utilisation en tant qu'électrode. Ce matériau comporte, comme le matériau de la présente invention, un excès d'oxygène mais, contrairement à l'oxyde de l'invention, n'est pas déficitaire en lanthane.

C'est pour résoudre ces problèmes de l'art antérieur que la présente invention propose d'utiliser en tant qu'électrode qu'électrode un matériau oxyde de formule générale suivante :

(1) A_{2-x-y}A'ₓA''_{y}M_{1-z}M'_{z}O_{4+δ},

où :
A est un cation métallique appartenant au groupe formé par les lanthanides et/ou les alcalins et/ou les alcalino-terreux,
A' est au moins un cation métallique appartenant au groupe formé par les lanthanides et/ou les alcalins et/ou les alcalino-terreux,
A" est une lacune cationique, c'est-à-dire une vacance de cations A et/ou A',
M est un métal appartenant au groupe formé par les métaux des éléments de transition,
M' est au moins un métal appartenant au groupe formé par les métaux des éléments de transition,
ledit matériau étant tel que
0<y<0,30, de préférence 0<y≤0,20 ;
0<δ<0,25, de préférence 0<5<0,10 ;
0≤x≤1; et
0≤z≤1.

La formule précédente englobe donc le cas où x est égal à 0, c'est-à-dire le cas de la présence d'un seul cation métallique, et aussi, indépendamment ou non du cas précédent, le cas où z est égal à 0 ou à 1, c'est-à-dire le cas de la présence d'un seul métal.

A' peut représenter plusieurs cations métalliques, et M' peut aussi, indépendamment, représenter plusieurs métaux ; l'homme du métier sait réécrire la formule (1) en fonction du nombre de composants.

La présence d'un coefficient δ de sur stoechiométrie en oxygène de valeur strictement supérieure à 0 contribue avantageusement à la conductivité ionique du matériau.

Selon un mode de réalisation particulièrement préféré de l'invention, M et M' sont de valence mixte, c'est-à-dire qu'avantageusement de tels métaux contribuent à la conductivité électronique du matériau.

Avantageusement, de tels matériaux utilisés selon l'invention présentent une bonne stabilité thermique en composition. Ceci a été montré par mesure ATG (analyse thermogravimétrique sous air), et vérifié par diffraction des rayons X en température, sur deux matériaux selon l'invention qui sont Nd_{1,95}NiO_{4+δ} et Nd_{1,90}NiO_{4+δ}. En effet, la mesure du coefficient δ de sur-stoechiométrie en oxygène par rapport à la température, sur une plage allant de la température ambiante, soit environ 20°C, à 1000°C, ne montre pas d'accident et vérifie que la perte de masse est directement et uniquement proportionnelle à la variation de la teneur en oxygène du matériau.

De façon avantageuse, les lacunes A" sont réparties en distribution statistique. En effet, des clichés de diffraction électronique obtenus par microscopie électronique à transmission du matériau selon l'invention qu'est Nd_{1,90}NiO_{4+δ} ne permettent de relever aucun allongement ou traînée des principales taches (0,0,1), ce qui révèle un ordre parfait selon l'axe c et l'absence d'intercroissances de type Ruddlesden-Popper au sein des empilements A₂MO_{4+δ}, confirmant ainsi une telle distribution statistique des lacunes de néodyme.

Par lanthanide, on entend selon l'invention le lanthane La ou un élément du groupe des lanthanides tel que Ce, Pr, Nd, Pm, Sm, Eu, Gd, Tb, Dy, Ho, Er, Tm, Yb ou Lu et Y. Par alcalin, on entend selon l'invention un élément hors l'hydrogène du groupe 1 (version IUPAC) de la classification périodique des éléments. Par alcalino-terreux, on entend selon l'invention un élément du groupe 2 (version IUPAC) de la classification périodique des éléments. Par métal de transition, on entend selon l'invention un élément des groupes 3 à 14 (version IUPAC) de la classification périodique des éléments, dont bien sûr les éléments de la période 4 tel que le titane Ti ou le Gallium Ga, les éléments de la période 5 tel que le zirconium Zr ou l'Etain Sn, et les éléments de la période 6 tel que le Tantale Ta ou le Mercure Hg. De préférence selon l'invention le métal de transition est un élément de la période 4.

Le matériau selon l'invention se caractérise avantageusement par des mesures très fines de rapport(s) (A et/ou A') / (M et/ou M') par microsonde de Castaing (ou EPMA acronyme de « Electron Probe Micro Analysis »), qui permettent de mettre en valeur la structure lacunaire en cation dudit matériau.

Dans un mode de réalisation préféré de l'invention, ledit matériau est tel que :
A et A' sont indépendamment choisis dans le groupe formé par le lanthane La, le praséodyme Pr, le strontium Sr, le calcium Ca, et le néodyme Nd, de façon préférée le néodyme Nd, le strontium Sr et le calcium Ca, de façon encore plus préférée le néodyme Nd, et tel que :
   M et M' sont indépendamment choisis dans le groupe formé par le chrome Cr, le manganèse Mn, le fer Fe, le cobalt Co, le nickel Ni et le cuivre Cu, de préférence le nickel Ni et le cuivre Cu, de façon encore plus préférée le nickel Ni.

Dans les cas particuliers selon l'invention où x n'est pas égal à 0 et z n'est pas égal à 0 ou à 1, le nombre de cations de type A est d'au moins deux : A et A', et le nombre de cations de type M est d'au moins deux : M et M'.

Dans un tel cas, de préférence:
A est choisi dans le groupe formé par le lanthane La, le praséodyme Pr et le néodyme Nd, de façon préférée le néodyme Nd,
A' est choisi dans le groupe formé par le strontium Sr et le calcium Ca, de façon préférée le calcium Ca,
M est choisi dans le groupe formé par le chrome Cr, le manganèse Mn, le fer Fe, le cobalt Co, le nickel Ni et le cuivre Cu, de préférence le nickel Ni, et
M' est choisi dans le groupe formé par le manganèse Mn, le fer Fe, le cuivre Cu ou le cobalt Co, de préférence le cuivre Cu ou le manganèse Mn.

Dans un mode de réalisation particulièrement préféré selon l'invention, le matériau a une structure cristallographique de type K₂NiF₄, comme représenté par exemple dans "Inorganic Crystal Structures", p 30, de B.G. Hyde et S. Anderson, Wiley Interscience Publication (1988). La structure est ainsi formée de couches d'octaèdres oxygénés MO₆ déplacées les unes par rapport aux autres de ½ ½ ½, des atomes A assurant la cohésion entre les couches et des oxygènes additionnels Oi pouvant s'insérer entre ces couches dans des sites interstitiels vacants.

Dans un mode de réalisation préféré, le matériau selon l'invention possède un coefficient d'échange de surface de l'oxygène, k, supérieur à 1.10⁻⁸ cm.s⁻¹ à 500 °C et à 2.10⁻⁶ cm.s⁻¹ à 900 °C pour l'oxygène. La variation dudit coefficient suit une loi d'Arrhénius, ce qui rend aisé le calcul de ce coefficient pour une autre température de la plage de températures qui intéresse l'invention. Cette valeur est généralement difficilement atteinte par les matériaux existants utilisés en pile à combustible.

Dans un mode de réalisation préféré, indépendamment ou non du mode de réalisation précédent, le matériau selon l'invention possède une conductivité électronique σₑ au moins égale à 70 S.cm⁻¹, de préférence au moins égale à 80 S.cm⁻¹, de façon encore plus préférée supérieure à 90 S.cm⁻¹, à 700°C.

Dans un mode de réalisation préféré, indépendamment ou non du mode de réalisation précédent, le matériau selon l'invention possède un coefficient de diffusion d'oxygène supérieur à 1.10⁻⁹ cm².s⁻¹ à 500 °C et 1.10⁻⁷ cm².s⁻¹ à 900°C. La variation dudit coefficient suit une loi d'Arrhénius, ce qui rend aisé le calcul de ce coefficient pour une autre température de la plage de températures qui intéresse l'invention. Cette valeur est généralement inatteignable par les matériaux existants utilisés en pile à combustible.

Dans un mode de réalisation préféré, le matériau selon l'invention possède un coefficient d'échange de surface de l'oxygène, k, supérieur à 1.10-⁸ cm.s⁻¹ à 500 °C et à 2.10⁻⁶ cm.s⁻¹ à 900°C pour l'oxygène, une conductivité électronique σₑ au moins égale à 70 S.cm⁻¹, de préférence au moins égale à 80 S.cm⁻¹, de façon encore plus préférée supérieure à 90 S.cm⁻¹, à 700°C, et un coefficient de diffusion d'oxygène supérieur à 1.10⁻⁹ cm².s⁻¹ à 500 °C et 1.10⁻⁷ cm².s⁻¹ à 900 °C.

L'invention concerne aussi une électrode comprenant au moins un matériau selon l'invention.

L'invention concerne enfin un dispositif de production d'énergie électrique de type pile à combustible comprenant au moins une cellule électrochimique comprenant un électrolyte solide, une anode, et une cathode qui est une électrode selon l'invention. Ledit dispositif comprend aussi le plus souvent deux interconnecteurs anodique et cathodique. En dehors de la cathode, toutes les autres pièces dudit dispositif sont des éléments connus de l'homme du métier.

Avantageusement, le dispositif selon l'invention permet l'utilisation de la cathode selon l'invention avec à la fois une bonne conductivité électronique et une bonne conductivité ionique, ainsi qu'une bonne stabilité thermique, et un rendement suffisant au point de vue industriel.

L'invention concerne enfin tout procédé de mise en oeuvre d'un tel dispositif.

L'invention concerne aussi l'utilisation de l'électrode selon l'invention en tant qu'électrode de pompe à oxygène servant à la purification de gaz.
Les figures 1 à 3 servent à illustrer l'invention, de manière non limitative, dans des graphes comparatifs.
La figure 1 est un graphe montrant, pour différents matériaux (un matériau selon l'invention, deux matériaux comparatifs), à différentes températures, la surtension cathodique ΔV en mV en fonction de j (mA/cm²).
La figure 2 est un graphe montrant, pour différents matériaux (deux matériaux selon l'invention, un matériau comparatif), le coefficient de diffusion d'oxygène D* (cm².s⁻¹) en fonction de 1000/T (K⁻¹), où T est la température.
La figure 3 est un graphe montrant, pour différents matériaux (un matériau selon l'invention, deux matériaux comparatifs(deux matériaux selon l'invention, un matériau comparatif), le coefficient d'échange de surface de l'oxygène, k (cm.s⁻¹), en fonction de 1000/T (K⁻¹), où T est la température.

### EXEMPLES

Les exemples qui suivent illustrent l'invention sans pour autant en limiter la portée.

Deux matériaux selon l'invention ont été synthétisés : Nd_{1,95}NiO_{4+δ} et Nd_{1,90}NiO_{4+δ}, ayant respectivement une valeur de y égale à 0,05 et 0,10 . Ces matériaux sont synthétisés par réaction à l'état solide des oxydes Nd₂O₃ et NiO à 1100 °C ou par des voies de chimie douce ou de sol-gel à partir par exemple des nitrates de néodyme et nickel en solution. Leur valeur de sur-stoechiométrie est égale respectivement à δ = 0,15 et à δ = 0,06, déterminé par analyse chimique du Ni³⁺ (iodométrie).

On mesure à 700°C leur conductivité électronique σₑ égale respectivement à 100 S.cm⁻¹ et 80 S.cm⁻¹. Leur coefficient d'échange de surface pour l'oxygène k est égal respectivement à 5,5.10⁻⁸ cm.s⁻¹ et à 1,7.10⁻⁸ cm.s⁻¹ à 500°C, et respectivement à 5,5.10⁻⁶ cm.s⁻¹ et à 1,7.10⁻⁶ cm.s⁻¹ à 900°C. Leur coefficient de diffusion de l'oxygène est égal respectivement à 3,2.10⁻⁹ et 5,2.10⁻⁹ cm².s⁻¹ à 500°C et à 3,5.10⁻⁷ et 2,5.10⁻⁷ cm².s⁻¹ à 900°C. Le pourcentage de cations Ni³⁺ à 700°C, déterminé par ATG (analyse thermogravimétrique sous air), est égal respectivement à 35% et à 28%. La variation de stoechiométrie en oxygène dans ce domaine de température, auquel appartient la température de fonctionnement d'une pile à combustible, est faible et n'a pas d'influence sur le coefficient de dilation thermique qui reste constant et égal à 12.7.10⁻⁶ K⁻¹.

Les propriétés électrochimiques de ces deux matériaux selon l'invention ont été évaluées dans un montage à trois électrodes dans une demi-pile du type matériau d'électrode /YSZ/ matériau d'électrode, où la contre électrode et l'électrode de travail sont symétriques, déposées par peinture sur l'électrolyte et recuites à 1100°C pendant 2 heures. L'électrode de référence en platine est placée loin des deux autres électrodes. Le comportement de ce matériau a été analysé dans des conditions proches de celles d'une pile SOFC, c'est-à-dire sous courant et dans une gamme de température de 500 à 800°C. Les surtensions cathodiques mesurées doivent être les plus faibles possibles. Il apparaît, ce qui n'est pas surprenant, qu'elles diminuent fortement avec la température.

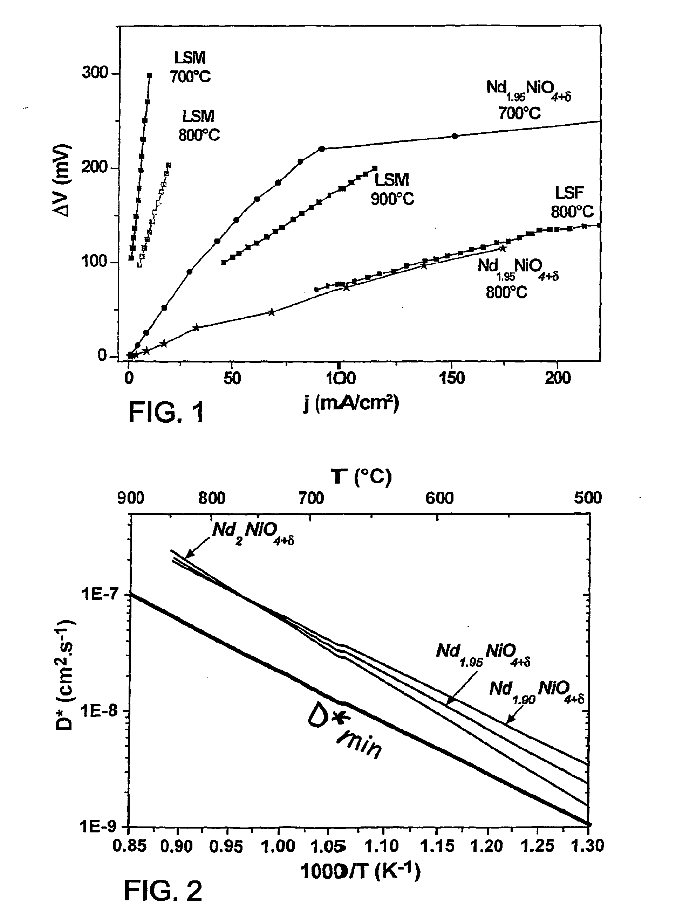

La figure 1 est un graphe montrant, pour différents matériaux (un matériau selon l'invention, deux matériaux comparatifs), à différentes températures, la surtension cathodique ΔV en mV en fonction de j (mA/cm²).

La surtension cathodique du matériau selon l'invention de composition particulière Nd_{1,95}NiO_{4+δ} a été alors comparée aux surtensions cathodiques de matériaux traditionnels (LSM) La_{0,7}Sr_{0,3}MnO₃, et LSF (La_{0,7}Sr_{0,3}FeO₃), à partir de données issues de la littérature (M. Krumpelt et al, Proceedings European SOFC Forum (Lucerne 2002), Ed. J. Huilsmans, vol. 1, p.215. La figure 1 présente des courbes indiquant, pour les matériaux testés, à diverses températures, la surtension cathodique en mV en fonction de la densité de courant j (mA/cm²) passant à travers de la cellule. On y voit que de façon très avantageuse les performances du matériau selon l'invention Nd_{1,95}NiO_{4+δ} sont meilleures que celles de ces matériaux utilisés.

La figure 2 est un graphe montrant, pour différents matériaux (deux matériaux selon l'invention, un matériau comparatif), le coefficient de diffusion d'oxygène D* (cm².s⁻¹) en fonction de 1000/T (K⁻¹), où T est la température. Chaque courbe est une droite. Les deux matériaux selon l'invention sont Nd_{1,95}NiO_{4+δ} et Nd_{1,90}NiO_{4+δ}. Le matériau comparatif est Nd₂NiO_{4+δ}, c'est-à-dire un matériau avec une sur stoechiométrie en oxygène mais sans lacune cationique. On voit que dans la plage de températures intéressante pour l'invention, les matériaux selon l'invention ont généralement, à l'erreur de mesure près, un coefficient D* plus élevé, et donc plus intéressant. La figure 2 représente aussi la droite indiquant le D* minimum, ou D* min, selon l'invention.

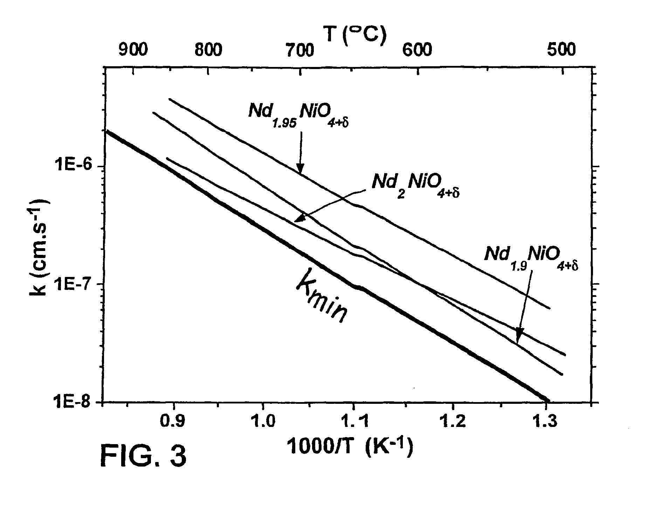

La figure 3 est un graphe montrant, pour différents matériaux (deux matériaux selon l'invention, un matériau comparatif), le coefficient d'échange de surface de l'oxygène, k (cm.s⁻¹) en fonction de 1000/T (K⁻¹), où T est la température. Chaque courbe est une droite. Les deux matériaux selon l'invention sont Nd_{1,95}NiO_{4+δ} et Nd_{1,90}NiO_{4+δ}. Le matériau comparatif est Nd₂NiO_{4+δ}, c'est-à-dire un matériau avec une sur stoechiométrie en oxygène mais sans lacune cationique. On voit que dans la plage de températures intéressante pour l'invention, les matériaux selon l'invention ont un coefficient k plus élevé, et donc plus intéressant. La figure 3 représente aussi la droite indiquant le D* minimum, ou D*ₘᵢₙ, selon l'invention.

## Revendications

1. Utilisation d'un matériau oxyde de formule générale suivante :
(1) A_{2-x-y}A'ₓA''_{y}M_{1-z}M'_{z}O_{4+δ},
où :
A et A' sont indépendamment choisis dans le groupe formé par le lanthane La, le praséodyme Pr, le strontium Sr, le calcium Ca, et le néodyme Nd, de façon préférée le néodyme Nd, le strontium Sr et le calcium Ca, de façon encore plus préférée le néodyme Nd,
A" est une lacune cationique, c'est-à-dire une vacance de cations A et/ou A',
M et M' sont indépendamment choisis dans le groupe formé par le chrome Cr, le manganèse Mn, le fer Fe, le cobalt Co, le nickel Ni et le cuivre Cu, de préférence le nickel Ni et le cuivre Cu, de façon encore plus préférée le nickel Ni,
ledit matériau étant tel que
0<y<0,30, de préférence 0<y≤0,20 ;
0<δ<0,25, de préférence 0<δ<0,10 ;
0≤x≤1 ; et
0≤z≤1,
en tant qu'électrode.

2. Utilisation selon la revendication 1, **caractérisée par le fait que** :
A est choisi dans le groupe formé par le lanthane La, le praséodyme Pr et le néodyme Nd, de façon préférée le néodyme Nd, et
A' est choisi dans le groupe formé par le strontium Sr et le calcium Ca, de façon préférée le calcium Ca,
et tel que :
M est choisi dans le groupe formé par le chrome Cr, le manganèse Mn, le fer Fe, le cobalt Co, le nickel Ni et le cuivre Cu, de préférence le nickel Ni, et
M' est choisi dans le groupe formé par le manganèse Mn, le fer Fe, le cuivre Cu ou le cobalt Co, de préférence le cuivre Cu ou le manganèse Mn.

3. Utilisation selon l'une des revendications précédentes, **caractérisée par le fait que** le matériau oxyde présente une structure cristallographique de type K₂NiF₄.

4. Utilisation selon l'une des revendications précédentes, **caractérisée par le fait que** le matériau oxyde possède un coefficient d'échange de surface de l'oxygène, k, supérieur à 1.10⁻⁸ cm.s⁻¹ à 500 °C et à 2.10⁻⁶ cm.s⁻¹ à 900 °C pour l'oxygène.

5. Utilisation selon l'une des revendications précédentes, **caractérisée par le fait que** le matériau oxyde possède une conductivité électronique σₑ au moins égale à 70 S.cm⁻¹, de préférence au moins égale à 80 S.cm⁻¹, de façon encore plus préférée supérieure à 90 S.cm⁻¹, à 700°C.

6. Utilisation selon l'une des revendications précédentes, **caractérisée par le fait que** le matériau oxyde possède un coefficient de diffusion d'oxygène supérieur à 1.10⁻⁹ cm².s⁻¹ à 500 °C et 1.10⁻⁷ cm².s⁻¹ à 900 °C.

7. Utilisation selon l'une quelconque des revendcations précédentes, **caractérisée par le fait que** l'électrode est une cathode.

8. Utilisation selon la revendication 7, **caractérisée par le fait que** la cathode est utilisée dans un dispositif de production d'énergie électrique de type pile à combustible comprenant au moins une cellule électrochimique comprenant un électrolyte solide, une anode, et une cathode qui est une électrode telle que définie à la revendication précédente.

9. Utilisation selon l'une quelconque des revendications 1 à 7, **caractérisée par le fait que** l'électrode est utilisée dans une pompe à oxygène servant à la purification de gaz.

## Claims

1. Use of an oxide material of the following general formula:
A_{2-x-y}A'ₓA"_{y}M_{1-z}M'_{z}O_{4+δ} (1)
where:
A and A' are independently chosen from the group formed by lanthanum La, praseodymium Pr, strontium Sr, calcium Ca and neodymium Nd, preferably neodymium Nd, strontium Sr and calcium Ca and even more preferably neodymium Nd,
A" is a cationic vacancy, that is to say a cation A and/or cation A' vacancy;
M and M' are independently chosen from the group formed by chromium Cr, manganese Mn, iron Fe, cobalt Co, nickel Ni and copper Cu, preferably nickel Ni and copper Cu, and even more preferably nickel Ni,
said material being such that:
0 < y < 0.30, preferably 0 < y ≤ 0.20;
0 < δ < 0.25, preferably 0 < δ < 0.10;
0 ≤ x ≤ 1; and
0 ≤ z ≤ 1
as an electrode.

2. Use as claimed in claim 1, wherein:
A is chosen from the group consisting of lanthanum La, praseodymium Pr and neodymium Nd, preferably neodymium Nd; and
A' is chosen from the group consisting of strontium Sr and calcium Ca, preferably calcium Ca,
and such that:
M is chosen from the group consisting of chromium Cr, manganese Mn, iron Fe, cobalt Co, nickel Ni and copper Cu, preferably nickel Ni; and
M' is chosen from the group consisting of manganese Mn, iron Fe, copper Cu and cobalt Co, preferably copper Cu and manganese Mn.

3. Use as claimed in one of the preceding claims, wherein the oxide material has a crystallographic structure of the K₂NiF₄ type.

4. Use as claimed in one of the preceding claims, wherein the oxide material has an oxygen surface exchange coefficient k of greater than 1 × 10⁻⁸ cm/s at 500°C and greater than 2 × 10⁻⁶ cm/s at 900°C in the case of oxygen.

5. Use as claimed in one of the preceding claims, wherein the oxide material has an electronic conductivity σₑ of at least 70 S/cm, preferably at least 80 S/cm and even more preferably greater than 90 S/cm at 700°C.

6. Use as claimed in one of the preceding claims, wherein the oxide material has an oxygen diffusion coefficient of greater than 1 × 10⁻⁹ cm²/s at 500 °C and greater than 1 × 10⁻⁷ cm²/s at 900°C.

7. Use as claimed in one of the preceding claims wherein the electrode is a cathode.

8. Use as claimed in claim 7 wherein the cathode is used in a device for producing electrical energy, of the fuel cell type comprising at least one electrochemical cell comprising a solid electrolyte, an anode, and a cathode which is an electrode as defined in the preceding claim.

9. Use as claimed in one of the claims 1 to 7 wherein the electrode is used in an oxygen pump electrode for gas purification.

## Patentansprüche

1. Verwendung eines Oxidmaterials der folgenden allgemeinen Formel:
(1) A_{2-x-y}A'ₓA"_{y}M_{1-z}M'_{z}O_{4+δ},
wobei:
A und A' unabhängig voneinander ausgewählt sind aus der Gruppe, die gebildet ist aus Lanthan La, Praseodym Pr, Strontium Sr, Calcium Ca und Neodym Nd, vorzugsweise Neodym Nd, Strontium Sr und Calcium Ca, weiter bevorzugt Neodym Nd,
A" eine kationische Lücke ist, das heißt eine Kationen-Vakanz A und/oder A',
M und M' unabhängig voneinander ausgewählt sind aus der Gruppe, die gebildet ist aus Chrom Cr, Mangan Mn, Eisen Fe, Kobalt Co, Nickel Ni und Kupfer Cu, vorzugsweise Nickel Ni und Kupfer Cu, weiter bevorzugt Nickel Ni,
wobei das Material aufweist
0 < y < 0,30, vorzugsweise 0 < y ≤ 0,20;
0 < δ < 0,25, vorzugsweise 0 < δ < 0,10;
0≤x≤1; und
0≤z≤1,
als Elektrode.

2. Verwendung gemäß Anspruch 1, **dadurch gekennzeichnet, dass**:
A ausgewählt ist aus der Gruppe, die gebildet ist aus Lanthan La, Praseodym Pr und Neodym Nd, vorzugsweise Neodym Nd, und
A' ausgewählt ist aus der Gruppe, die gebildet ist aus Strontium Sr und Calcium Ca, vorzugsweise Calcium Ca,
und dass:
M ausgewählt ist aus der Gruppe, die gebildet ist aus Chrom Cr, Mangan Mn, Eisen Fe, Kobalt Co, Nickel Ni und Kupfer Cu, vorzugsweise Nickel Ni, und
M' ausgewählt ist aus der Gruppe, die gebildet ist aus Mangan Mn, Eisen Fe, Kupfer Cu oder Kobalt Co, vorzugsweise Kupfer Cu oder Mangan Mn.

3. Verwendung gemäß einem der vorhergehenden Ansprüche, **dadurch gekennzeichnet, dass** das Oxidmaterial eine kristallografische Struktur des Typs K₂NiF₄ aufweist.

4. Verwendung gemäß einem der vorhergehenden Ansprüche, **dadurch gekennzeichnet, dass** das Oxidmaterial einen Sauerstoffoberflächenaustauschkoeffizienten k von größer als 1.10⁻⁸ cm.s⁻¹ hei 500 °C und von 2.10⁻⁶ cm.s⁻¹ bei 900°C für Sauerstoff besitzt.

5. Verwendung gemäß einem der vorhergehenden Ansprüche, **dadurch gekennzeichnet, dass** das Oxidmaterial eine elektronische Leitfähigkeit σₑ von mindestens gleich 70 S.cm⁻¹, vorzugsweise von mindestens gleich 80 S.cm⁻¹, besonders bevorzugt größer als 90 S.cm⁻¹ bei 700 °C besitzt.

6. Verwendung gemäß einem der vorhergehenden Ansprüche, **dadurch gekennzeichnet, dass** das Oxidmaterial einen Sauerstoffdiffusionskoeffizienten von größer als 1.10⁻⁹ cm².s⁻¹ bei 500 °C und 1.10⁻⁷ cm².s⁻¹ bei 900 °C besitzt.

7. Verwendung gemäß einem der vorhergehenden Ansprüche, **dadurch gekennzeichnet, dass** die Elektrode eine Kathode ist.

8. Verwendung gemäß Anspruch 7, **dadurch gekennzeichnet, dass** die Kathode in einer Vorrichtung zur Erzeugung elektrischer Energie des Typs einer Brennstoffzelle verwendet wird, welche mindestens eine elektrochemische Zelle aufweist, die einen festen Elektrolyten, eine Anode und eine Kathode, welche eine Elektrode gemäß einem der vorhergehenden Ansprüche ist, aufweist.

9. Verwendung gemäß einem der Ansprüche 1 bis 7, **dadurch gekennzeichnet, dass** die Elektrode in einer Sauerstoffpumpe, die der Gasreinigung dient, verwendet wird.
